(19) **Europäisches Patentamt / European Patent Office / Office européen des brevets**

(11) **EP 4 760 747 A1**

(12) # EUROPEAN PATENT APPLICATION

(43) Date of publication:
17.06.2026   Bulletin 2026/25

(51) International Patent Classification (IPC):
*G21B 1/05* (2006.01)    *G21B 1/11* (2006.01)
*H05H 1/16* (2006.01)

(21) Application number: 24220014.5

(22) Date of filing: 13.12.2024

(52) Cooperative Patent Classification (CPC):
H05H 1/16; G21B 1/05; G21B 1/11

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: Novatron Fusion Group AB
167 33 Bromma (SE)

(72) Inventor: Jäderberg, Jan
163 47 Spånga (SE)

(74) Representative: AWA Sweden AB
Matrosgatan 1
Box 5117
200 71 Malmö (SE)

Remarks:
The application is published incomplete as filed (Rule 68(1) EPC).

(54) **MAGNETIC MIRROR MACHINE**

(57)   A magnetic mirror machine (200, 600), comprises a plurality of circularly arranged coils (11, 12, 21, 22, 41, 42) arranged for generating a plurality of mirror regions (108a,b,c,d,e,f) of converging magnetic field lines; and a plurality of electrode arrangements (300, 302, 312, 314, 700, 702, 712, 714) at a mirror region of said plurality of mirror regions, wherein said plurality of electrode arrangements comprises a first electrode arrangement comprising one or more electrode components (304, 306, 316, 706, 708, 718) enclosing at least a first part of said mirror region; and a second electrode arrangement, longitudinally displaced with respect to said first electrode arrangement, comprising one or more electrode components (308, 310, 318, 712, 714, 720) enclosing at least a second part of said mirror region.

Fig. 6

## Description

Field of technology

The present disclosure relates to a magnetic mirror machine, which may be used as a plasma confinement device, and to a method applied at a magnetic mirror machine.

Background

Great efforts are being made to design a reactor for controlled fusion on earth. The most promising fusion process is between the hydrogen isotopes deuterium ($^2$H) and tritium ($^3$H). In the deuterium-tritium fusion presses, a $^4$He alpha particle, having a kinetic energy of about 3.5 MeV and a neutron, having a kinetic energy of about 14.1 MeV, are created.

For fusion to occur, nuclei must be in the form of ions in a plasma having a temperature in the order of 150 million kelvins. Providing confinement for such a plasma remains a major challenge.

Plasma confinement involves confining the charged particles of the plasma. There are several different known magnetic configurations for plasma confinement.

One class of such configurations are magnetic mirror machines. Therein, plasma particles, i.e., ions and electrons, follow magnetic field lines, where the magnetic field lines typically run longitudinally or substantially longitudinally through the magnetic mirror machine. Particles may be reflected in areas of converging magnetic field lines, corresponding to increasing magnetic flux density, at respective ends of a plasma confinement area in the form of a plasma confinement cell.

Thus, a plasma confinement cell of the magnetic mirror machine may at each of its two ends be limited by a respective mirror region of increased magnetic flux density relative to a central part of the plasma confinement region and plasma electrons and ions may be confined using an axial magnetic field, i.e., axially confined along magnetic field lines, whereby magnetic mirror regions of converging magnetic field lines in which plasma particles may be reflected may be created at respective ends of a plasma confinement cell.

Typically, a plurality of electromagnetic coils may be arranged to create such regions of converging magnetic fields lines in which plasma particles are reflected.

PCT/EP2020/081762, hereby incorporated by reference in its entirety, discloses one such configuration. Another such configuration is the classic magnetic bottle.

Various techniques for increasing the plasma confinement performance, such as the mirror ratio and/or plasma confinement time, in magnetic mirror machines are known in the art. Various such techniques may be referred to as plugging.

A technique for increasing plasma confinement performance is the tandem mirror, wherein the plasma confinement region of the magnetic mirror machine may be arranged with a plurality of plasma confinement areas, so that a central plasma confinement cell, the "central cell", is complemented by one or more additional tandem plasma confinement cells, "tandem cells", typically with one tandem plasma confinement cell on each side of the central plasma confinement cell, wherein the central plasma confinement cell and each tandem plasma confinement cell are separated by mirror regions of converging magnetic field lines. The tandem plasma confinement cells may also be referred to as plug cells. Such plugging technique may be referred to as magnetic plugging.

A further technique for increasing plasma confinement performance employable in conjunction with the tandem mirror is ambipolar plugging. By enhancing the positive electrostatic potential of the tandem cells, plasma ions in the central plasma confinement cell may be better confined, which may allow for the obtaining of a higher mirror ratio. The electrostatic potential may, e.g., be enhanced through heating of tandem cell electrons to a temperature higher, typically slightly higher, than the temperature of the central plasma confinement cell electrons, or through an increase of the plasma density in the tandem cell as compared to the central cell, typically by a factor of ten or more.

A further technique for increasing plasma confinement performance is ponderomotive plugging. In pondermotive plugging, an alternating electric field is applied at respective ends of the plasma confinement region, acting repulsively on both electrons and ions. As radio frequency (RF) electric fields typically may be used, such plugging may also be referred to as RF plugging. The ponderomotive force, a non-linear force that a charged particle experiences in an oscillating electric field with a spatial gradient, propels the charged particle towards regions of lower electric field strength. This motion is a result of the particle experiencing a stronger force in the more intense electric field during half of the oscillation period, which is not offset by the weaker electric field in the other half of the oscillation period. As a result, over a full oscillation period, the particle migrates towards the area of lesser electric field.

Generally, there is a need to further improve the magnetic mirror performance of such magnetic mirror machines, in order to improve plasma confinement performance.

Summary

It is an object of the present disclosure to provide an improved magnetic mirror machine, in particular for use for plasma confinement, and in particular for use in a fusion reactor.

To this end, according to a first aspect, there is provided a magnetic mirror machine comprising a plurality of circularly arranged coils arranged for generating a plurality of mirror regions of converging magnetic field lines; and a plurality of electrode arrangements at a mirror region of said plurality of mirror regions, wherein said plurality of electrode arrangements comprises a first electrode arrangement comprising one or more electrode components enclosing at least a first part of said mirror region; and a second electrode arrangement, longitudinally displaced with respect to said first electrode arrangement, comprising one or more electrode components enclosing at least a second part of said mirror region.

The magnetic mirror machine may find use as a plasma confinement device, in particular as part of a fusion reactor.

As an electrode arrangement should be understood one electrode or a plurality of connected, or at least connectable, electrodes.

As a longitudinal direction should be understood a direction along, or at least substantially along, the magnetic field lines of the magnetic mirror machine. Thus, a first feature being longitudinally displaced with regard to a second feature should be understood as the first feature being located away from the center of the magnetic mirror machine, or closer to the center of the magnetic mirror machine, following the magnetic field lines.

As a transversal direction should be understood a direction perpendicular to, or at least substantially perpendicular to, the magnetic field lines of the magnetic mirror machine.

The first electrode arrangement and the second electrode arrangement enclosing respective parts of the mirror region, as per the above, with the second electrode arrangement being longitudinally displaced with respect to the first electrode arrangement, may allow for arranging an alternating electric field with a considerable component parallel to the magnetic field in the mirror region. Such an electric field may allow for efficient ponderomotive confinement of plasma electrons, which, due to an inverse mass dependence in the ponderomotive effective energy potential may be more easily achievable than ponderomotive plasma ion confinement based on alternating electric fields mainly perpendicular to the magnetic field in the mirror region. Thus, the present inventive concept may allow for particularly efficient ponderomotive plugging.

Furthermore, arranging of the first electrode arrangement and the second electrode as per the above, enclosing the mirror region, with the second electrode arrangement being longitudinally displaced with respect to the first electrode arrangement, may allow for a particularly simple and convenient way of arranging an alternating electric field with electric field lines parallel with, or at least substantially parallel with, the magnetic field lines of the mirror region.

Said mirror region may be formed at an annular gap between a first coil of said plurality of coils arranged to carry a current in a first direction and a second coil of said plurality of coils arranged to carry a current in a second direction opposite to said first direction. This may be a particularly beneficial application of the present inventive concept, as the relatively narrow sheet-like geometry of the plasma at such an annular gap may allow for particularly efficient ponderomotive plugging.

The respective one or more electrode components of an electrode arrangement of said plurality of electrode arrangements may comprise a first electrode ring and a second electrode ring, wherein said first electrode ring and said second electrode ring are located on transversally opposite sides of said annular gap. This may be a particularly beneficial application of the present inventive concept.

Said mirror region may be formed at a cylindrical gap transversally inside a coil of said plurality of coils. This may be another particularly beneficial application of the present inventive concept.

An electrode arrangement of said plurality of electrode arrangements may comprise an electrode ring located at said cylindrical gap. This may be a particularly simple and convenient way of arranging the electrode arrangement.

Said plurality of electrode arrangements may further comprise a third electrode arrangement, longitudinally displaced with respect to said first electrode arrangement in a direction opposite to said second electrode arrangement, comprising one or more electrode components enclosing at least a third part of said mirror region.

Hereby, the first electrode arrangement, the second electrode arrangement, and the third electrode arrangement, i.e., the plurality of electrode arrangements, may be arranged at said mirror region so that said first part of said mirror region and said third part of said mirror region are located at opposite sides of a region of maximal magnetic flux density of the mirror region. Hereby, it may be possible to arrange for a ponderomotive potential having first maximum located on a first side of a region of maximum magnetic flux density in the mirror region and a second maximum on a second, longitudinally opposite, side of the region of maximum magnetic flux density in the mirror region. This may allow for making the achievable ponderomotive plugging performance less dependent on exact alignment of the plurality of electrode arrangements in relation to the electromagnetic coils of the mirror region. Furthermore, this may allow for independent control of ponderomotive plugging on each longitudinal side of the mirror region. Thus, efficient ponderomotive plugging may be more easily achieved.

Said magnetic mirror machine may further comprise circuitry arranged to apply an alternating electric potential between, on the first hand, said first electrode arrangement, and, on the second hand said second electrode arrangement and, optionally, said third electrode arrangement.

The magnetic mirror machine according to the first aspect may be used for confining a plasma.

The magnetic mirror machine according to the first aspect may be used in a fusion reactor.

According to a second aspect, there is provided a method applied at a magnetic mirror machine comprising a plurality of circularly arranged coils, comprising generating, using said plurality of circularly arranged coils, a plurality of mirror regions of converging magnetic field lines, applying an alternating electric potential between a first electrode arrangement enclosing at least a first part of said mirror region and a second electrode arrangement longitudinally displaced with respect to said first electrode arrangement and enclosing at least a second part of said mirror region.

Embodiments and advantages of this second aspect may generally be similar to or the same as those of the first embodiment.

According to a third aspect, there is provided a magnetic mirror machine comprising a plurality of circularly arranged coils, said plurality of circularly arranged coils comprising a first coil arranged to carry a current in a first direction and a second coil arranged to carry a current in a second direction opposite to said first direction, said magnetic mirror machine further comprising, at an annular gap between said first coil and said second coil a first electrode arrangement, comprising a first electrode ring and a second electrode ring, wherein said first electrode ring and said second electrode ring are located on transversally opposite sides of said annular gap; and a second electrode arrangement longitudinally displaced with respect to said first electrode arrangement and comprising a first electrode ring and a second electrode ring, wherein said first electrode ring and said second electrode ring are located on transversally opposite sides of said annular gap.

Embodiments and advantages of this third aspect may generally be similar to or the same as those of the first embodiment.

According to a fourth aspect, there is provided a magnetic mirror machine comprising a plurality of circularly arranged coils, said magnetic mirror machine further comprising, at a cylindrical gap transversally inside a coil of said plurality of coils, a first electrode arrangement comprising a first electrode ring located at said circular gap; and a second electrode arrangement longitudinally displaced with respect to said first electrode arrangement comprising a second electrode ring.

Embodiments and advantages of this fourth aspect may generally be similar to or the same as those of the first embodiment.

Brief description of the drawings

The above, as well as additional objects, features and advantages of the present inventive concept, will be better understood through the following illustrative and non-limiting detailed description of preferred embodiments, with reference to the appended drawings, where the same reference numerals will be used for similar elements, wherein:

Fig. 1 is a planar cross-sectional view of a first magnetic mirror machine;
Figs 2a, 2b, and 2c are perspective views of pluralities of electrode arrangements, wherein Fig. 2b is a cut-out view;
Fig. 3a is a planar cross-sectional view of electric field strengths around a plurality of electrode arrangements of a first type, and Fig. 3b is a planar cross-sectional view of magnetic field lines and directions around the same;
Fig. 4a is a planar cross-sectional view of electric field strengths around a plurality of electrode arrangements according to a second type, and Fig. 4b is a planar cross-sectional view of magnetic field lines and directions around the same;
Figs 5a and 5b are graphs of electric field strengths;
Fig. 6 is a planar cross-sectional view of a second magnetic mirror machine;
Figs 7a, and 7b are perspective views of pluralities of electrode arrangements, wherein Fig. 7b is a cut-out view;
Fig. 8a is a planar cross-sectional view of electric field strengths around a plurality of electrode arrangements according to the first type, and Fig. 8b is a planar cross-sectional view of magnetic field lines and directions around the same;
Fig. 9a is a planar cross-sectional view of electric field strengths around a plurality of electrode arrangements according to the second type, and Fig. 9b is a planar cross-sectional view of magnetic field lines and directions around the same; and
Figs 10a and 10b are graphs of electric field strengths.

Detailed description

Throughout this disclosure references will be made to figures showing simulated magnetic field lines, i.e., equal magnetic potential lines.

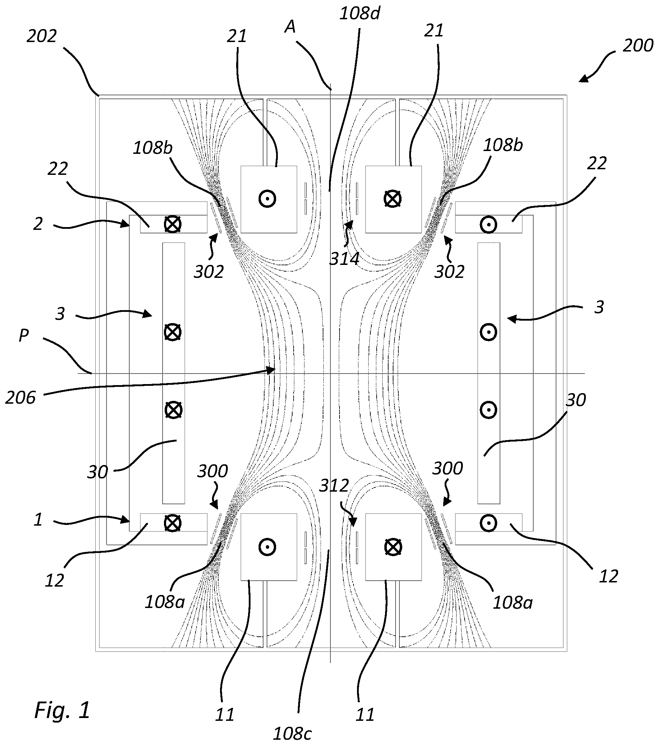

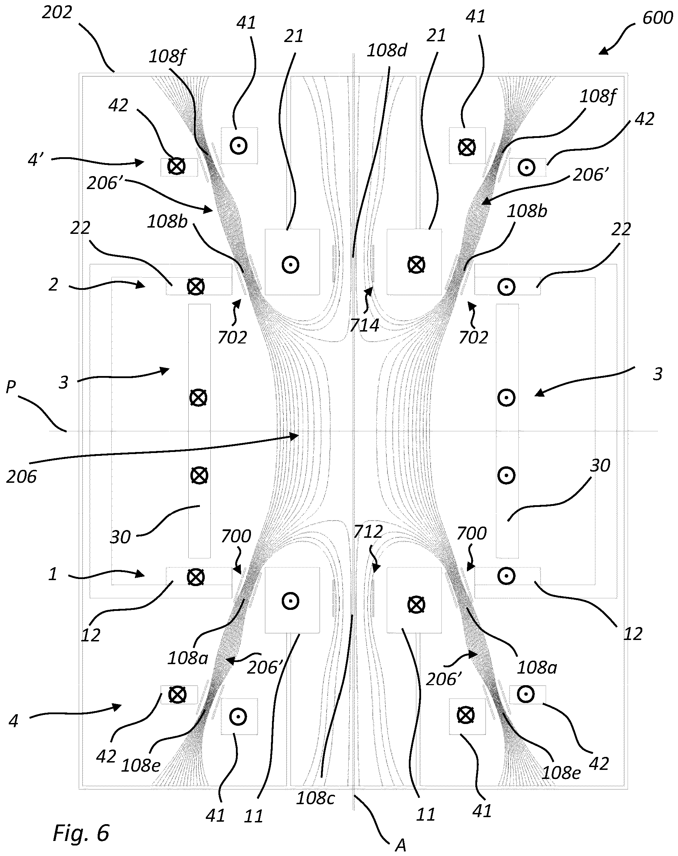

Throughout this disclosure, reference may be made to coordinate systems and directions relative to the axis A and the symmetry plane P of a respective magnetic mirror machine 200, 600, as shown in, e.g., Figs 1 and 6. In particular, coordinates and directions may be described with reference to a cylindrical coordinate system or to a cartesian coordinate system, each having as origin the intersection of the symmetry axis A and the symmetry plane P.

The cartesian coordinate system, with coordinates referred to as "x, y, z", "X, Y, Z", "A, B, C" or the like, should be understood as having the first two coordinate axes "x, y", "X, Y", "A, B", or the like, lying in the symmetry plane P and the third coordinate axis "z", "Z", "C", or the like, extending in a positive direction upwards from the origin along the symmetry axis A.

If no units for spatial coordinates are disclosed, units of meters or degrees are implied. If no unit of time is disclosed, a unit of seconds is implied.

The cylindrical coordinate system, should be understood as having a radial direction and coordinate ("r", or the like) extending from the origin at the intersection of the symmetry axis A and the symmetry plane P, an azimuth direction and coordinate ("phi", "Phi", or the like) measured as a rotational angle around the symmetry axis A, and an axial direction and coordinate ("z", "Z", "C" or the like) extending in a positive direction from the origin upwards along the symmetry axis A. Positive direction for the azimuth direction is according to the right-hand rule with respect to the positive axial direction.

As is generally known, plasma confinement devices may be based either on open magnetic field lines or closed field lines.

A closed-field line configuration may, for example, be realized with a toroidal magnetic field. An example of such a device is a tokamak.

Open-field-line plasma confinement devices, as known per se in the prior art, may operate by a principle of magnetic mirroring, wherein the charged particles of the plasma are reflected in areas of increasing magnetic flux density of the plasma confinement area.

As in the present case, a magnetic mirror machine may be a linear magnetic mirror machine with, at least, a first mirror region located at the first end of the magnetic mirror machine and a second mirror region located at the second end of the linear magnetic mirror machine.

Highly beneficial for a viable fusion reactor is a high Q ratio, defined as is the ratio between produced fusion power and plasma heating power. As an indictive example, a Q value of 30 or more may be desirable.

A high Q ratio may be allowed for through a long plasma confinement time, which in turn may, for example, be realized through a high mirror ratio, and through plugging techniques.

With respect to the mirror ratio, while recognized to be able to provide plasma confinement, open field-line plasma confinement devices will always have leakage of charge particles with velocity vectors sufficiently aligned with the magnetic field lines. More specifically, the mirror effect will occur for all particles within a range of angles of approach outside a loss cone defined by the helix spiral pitch angle of the charged particle's gyration spin around the magnetic field lines.

The extent of the loss cone is determined by the mirror ratio $r_{\mathrm{mirror}}$, defined as the ratio between maximum $B_{\mathrm{max}}$ and minimum $B_{min}$ magnetic flux density following a magnetic field line:

$$r_{\mathrm{mirror}} = \frac{B_{\mathrm{max}}}{B_{min}}.$$

The angle defining the loss cone is then:

$$\alpha_{\mathrm{cone}} = \arccos \frac{1}{\sqrt{r_{\mathrm{mirror}}}}.$$

Thus, it can be seen that high mirror ratio will lead to a small loss cone, so that only the particle having velocities the most aligned with the field lines will escape. Conversely, a low mirror ratio will lead to a larger loss cone.

Plugging techniques, such as a tandem mirror, ambipolar plugging, and ponderomotive plugging may further allow for improvement of the plasma confinement time.

As related to above, ponderomotive plugging works on a principle of applying an oscillating electric field, resulting in a non-linear force experienced by the plasma particles. The ponderomotive force repels both electrons and ions, but may take on somewhat different forms for the two species, depending on the direction of the RF field.

It may be shown that an effective energy potential $\Psi_{pe}$ resulting from the ponderomotive force on plasma electrons and the effective energy potential $\Psi_{pi}$ resulting from the ponderomotive force on plasma ions, respectively, may be written

$$\Psi_{pe} = \frac{e^2 E_{p\parallel}^2}{4 m_e \omega^2}$$

and

$$\Psi_{pi} = \frac{e^2 E_{p\parallel}^2}{4 m_i \omega^2} + \frac{e^2 E_{p\perp}^2}{4 m_i (\omega^2 - \omega_{ci}^2)}$$

wherein e is the unit charge, $E_{p\parallel}$ is the electric field strength component parallel to the magnetic $B$ field, $E_{p\perp}$ is the electric field strength component perpendicular to the magnetic $B$ field, $m_e$ is the electron mass, $m_i$ is the ion mass, $\omega$ is the angular frequency of the applied RF electric field, and $\omega_{ci}$ is the ion cyclotron frequency.

As can be seen, due to the inverse mass dependence in the above equations, parallel electric RF fields act predominantly on electrons, while the resonant denominator in the second term of the second equation above allows $\Psi_{pi}$ to have a significant value also for ions when oscillations are perpendicular to the magnetic field lines.

Fig. 1 is a planar cross-sectional view of a first magnetic mirror machine 200. The magnetic mirror machine 200 may operate as a plasma confinement device and thus may be used for plasma confinement.

The magnetic mirror machine 200 may comprise customary shielding and/or a plasma vessel 202, as known in the art. The shielding may comprise neutron shielding, as known per se.

The magnetic mirror machine 200 may be comprised in a fusion reactor and/or used in a fusion reactor.

In the example of Fig. 1, the magnetic mirror machine 200 is rotationally symmetric, or at least substantially rotationally symmetric, around a symmetry axis A lying in the plane of Fig. 1.

As will be elaborated further upon below, the magnetic mirror machine 200 comprises a plurality of electromagnetic coils comprised in a number of magnet systems. Each electromagnetic coil may be arranged in a circular loop, as in Fig. 1. Thus, the magnetic mirror machine 200 comprises a plurality of circularly arranged coils.

Each electromagnetic coil may be arranged for carrying a respective direct current, the direction of which being conventionally indicated using respective a dot or cross in Fig. 1, wherein a dot indicates a conventional current directed out of the cross-sectional plane of the drawing and a cross indicates a conventional current directed into the cross-sectional plane of the drawing.

Thus, Fig. 1 shows coil direct current directions during operation of the magnet systems as used in a plasma confinement device. As readily appreciated by the skilled person, embodiments with all currents reversed as compared to what is disclosed in Fig. 1 are equally possible.

The magnetic mirror machine 200 comprises a first magnet system 1 and a second magnet system 2, with Fig. 1 showing a cross sectional view through the first magnet system 1 and the second magnet system 2 in a cross-sectional plane through the symmetry axis A.

The first magnet system 1 comprises a first plurality of concentrically arranged circular-loop coils arranged around a symmetry axis A, for example, as shown, a first, inner coil 11 and a second, outer, coil 12, arranged concentrically to and radially and transversally outside the inner coil 11.

Further, the magnetic mirror machine 200 comprises a second magnet system 2 comprising a second plurality of circular-loop coils, likewise concentrically arranged around the axis A, but vertically and longitudinally displaced relative to the first magnet system. The second magnet system may, for example, as shown, comprise a first, inner coil 21 and a second, outer, coil 22, arranged concentrically to and radially and transversally outside the inner coil 21.

The coils 21, 22 of the second magnet system 2 are arranged with mirror symmetry with respect to the coils 11, 12 of first magnet system 1 relative to a symmetry plane P, which, as shown, may be at equal distance to each of the first magnet system 1 and to the second magnet system 2.

Still with reference to Fig. 1, the first plurality of concentrically arranged coils 11, 12 of the first magnet system 1 may, as shown, be identically designed to the second plurality of concentrically arranged coils 21, 22 of the second magnet system 2, respecting the mirror symmetry.

In the first magnet system 1, the current of the inner coil 11 is configured to run in a direction into the cross-sectional plane (marked with a cross) on the right side of Fig. 1 and out of the cross-sectional plane (marked with a dotted circle) in the left side of Fig. 1, i.e., counter-clockwise a seen from above the first magnet system. Conversely, the current of the outer coil 12 is configured to run in a direction out of the cross-sectional plane (marked with a dotted circle) on the right side of Fig. 1 and into the cross-sectional plane (marked with a cross circle) in the left side of Fig. 1, i.e., clockwise a seen from above the first magnet system.

Thus, the first plurality of concentrically arranged circular-loop coils comprises a first coil 11 arranged to carry a current in a first direction, and a second coil 12 arranged to carry a current in a second direction opposite to the first direction.

Throughout this disclosure, for example, the respective absolute value of the respective currents carried by each disclosed coil may be equal. Alternatively, two or more coils may carry currents having unequal absolute values.

Similarly, respecting the mirror symmetry with respect to the symmetry plane P, in the second magnet system 2, the current of the inner coil 21 is configured to run in a direction into the cross-sectional plane (marked with a cross) on the right side of Fig. 1 and out of the cross-sectional plane (marked with a dotted circle) in the left side of Fig. 1, i.e., counter-clockwise a seen from above the first magnet system and the current of the outer coil 22 is configured to run in a direction out of the cross-sectional plane (marked with a dotted circle) on the right side of Fig. 1 and into the cross-sectional plane (marked with a cross circle) in the left side of Fig. 1, i.e., clockwise a seen from above the first magnet system.

Thus, the currents of the second magnet system 2, with first magnet system 1 and the second magnet system 2 in operation, are arranged with mirror symmetry with respect to the first magnet system relative to the symmetry plane P located between the first magnet system 1 and the second magnet system 2.

Thus, expressed in other words, a plasma confinement device may comprise two disc-shaped magnet systems 1, 2 facing each other in axial direction, forming a space 206 where a plasma may be confined. Each magnet system 1, 2 has at least two coils 11, 12, 21, 22 where the current direction and magnitude create a normal magnetic field boundary condition at the symmetry plane P.

Further, as shown in Fig. 1, the magnetic mirror machine 200 may comprise a third magnet system 3, which may be arranged radially and transversally outside, with respect to the axis A, the plasma confinement area 206. Further, again as shown in Fig. 1, the third magnet system 3 may be located radially and transversally outside, with respect to the axis A, the first magnet system 1 and the second magnet system 2.

The third magnet system 3 may comprise at least one circular-loop coil, for example, as shown, single, cylindrical coil 30. Alternatively (not shown), for example, the third magnet system may comprise a first circular-coil loop coil arranged on the same side of the symmetry plane P as the first magnet system and a second circular-coil loop arranged on the opposite side of the symmetry plane P, wherein the second coil is arranged with mirror symmetry relative to the first coil.

In particular, each coil of the third magnet system, such as the coil 30, as shown in Fig. 1, has a current configured to run, with the magnet system in operation, in a direction into the cross-sectional plane (marked with a cross) on the left side of Fig. 1 and out of the cross-sectional plane (marked with a dotted circle) on the right side of Fig. 1, i.e., clockwise as seen from above the first magnet system.

Fig. 1 further shows magnetic field lines resulting from the mirror-symmetric configuration of currents in the magnet systems described above. The resulting magnetic field configuration results in the annular confinement area 206, in which ions of a plasma may be confined. The plasma confinement area is radially restricted between an inner radius and an outer radius, as confirmed by simulations. Plasma ions confined in the plasma confinement device, in the plasma confinement area 206 at the symmetry plane P, will perform a circular gyration motion in that plane due to the magnetic field perpendicular to that plane. As mentioned, no toroidal field is present. Given the absence of a toroidal magnetic field component, therefore, there will be no axial Lorentz force on the ions at the symmetry plane P. Moving away from the symmetry plane in axial direction, along a field line, the Lorentz force may push the ion back towards the symmetry plane, confining the ion at the symmetry plane.

Through an appropriate choice of the geometries of the of the coils of the first magnet system 1 and the second magnet system 2, and optionally of the third magnet system 3, and the currents carried therein, it is possible to achieve a field configuration displaying a region of relatively low magnetic flux density near the symmetry plane P and a region of relatively high magnetic flux density extending into and past the regions 108a,b,c,d, as will be elaborated further upon below, creating the confinement area 206 for charged particles, based on the principle of magnetic reflection. In particular, it is possible to arrange for the first magnet system 1, the second magnet system 2, and, optionally, the third magnet system 3, to generate a plurality of mirror regions of converging magnetic field lines, again, as will be further elaborated upon below.

Thus, as is evident from Fig. 1, the plasma confinement area 206 is limited by respective mirror regions 108a,b,c,d of increased magnetic flux density, or, alternatively expressed, converging magnetic field lines, relative to an area around symmetry plane P of the magnetic mirror machine, as is evident from the magnetic field line spacing in each mirror region 108a,b,c,d as compared to the area around the symmetry plane P. In other words, each respective mirror region 108a,b,c,d comprises converging magnetic field lines as approached from the area around the symmetry plane P of the magnetic mirror machine 200.

A first mirror region 108a is formed between the first coil 11 and the second coil 12 of the first magnet system 1, while a second mirror region 108b is formed between the first coil 21 and the second coil 22 of the second magnet system 2.

Thus, the first mirror region 108a and the second mirror region 108b each is formed at an annular gap between a first coil of the plurality of coils arranged to carry a current in the first direction and a second coil of the plurality of coils arranged to carry a current in a second direction opposite to the first direction.

A third mirror region 108c is formed in a cylindrical gap transversally inside the first coil 11 of the first magnet system 1.

A fourth mirror region 108d is formed in a cylindrical gap transversally inside the first coil 21 of the second magnet system 2.

As will be elaborated upon further below, the magnetic mirror machine 200 further comprises at least one plurality of electrode arrangements arranged at one of the mirror regions 108a,b,c,d. For example, as shown in Fig. 1, a respective such a plurality of electrode arrangements may be present at each of the mirror regions 108a,b,c,d.

A first type of plurality of electrode arrangements may be configured to enclose an annular gap between two coils.

In particular, as shown in Fig. 1, a first plurality of electrode arrangements 300 of the first type may be located at the annular gap formed at the first mirror region 108a and a second plurality of electrode arrangements 302 of the first type may be located at the annular gap formed at the second mirror region 108b.

In the example of Fig.1, the first plurality of electrode arrangements 300 of the first type and the second plurality of electrode arrangements 302 of the first type have mirror symmetry with respect to the plane P and further reference will be made to the second plurality of electrode arrangements 302 of the first type. As the skilled person would recognize, any features of the second plurality of electrode arrangements 302 of the first type disclosed herein would equally apply to the first plurality of electrode arrangements 300 of the first type.

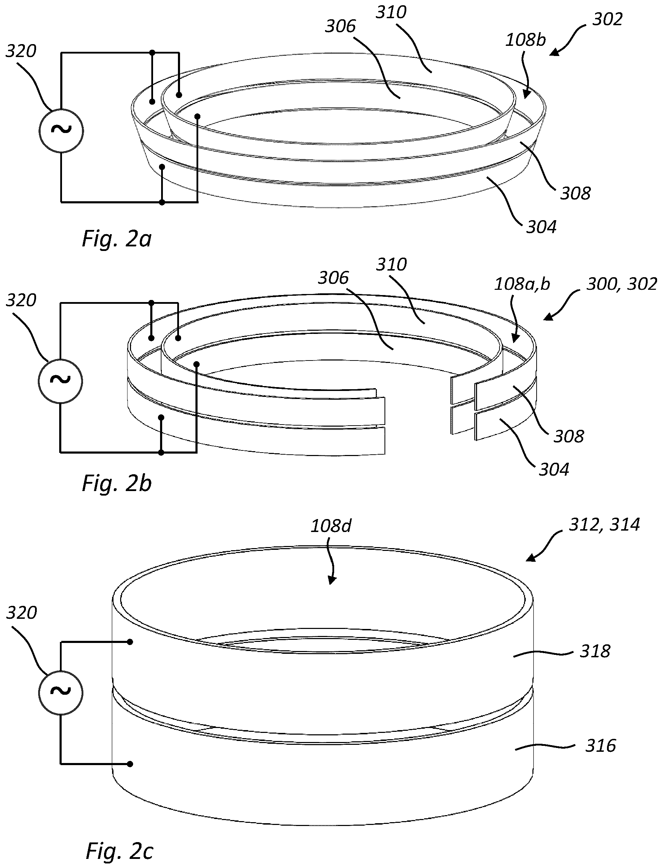

The second plurality of electrode arrangements 302 of the first type is visible in Fig.1 and is further depicted in a detailed perspective view in Fig. 2a. As visible, the second plurality of electrode arrangements 302 of the first type comprises a plurality of electrode components, in the form of a first electrode ring 304, a second electrode ring 306, a third electrode ring 308, and a fourth electrode ring 310.

The first electrode ring 304 and the second electrode ring 306 are radially and transversally displaced with respect to each other and located on opposite sides of the mirror region 108b, i.e., the first electrode ring 304 and the second electrode ring 306 are located on radially and transversally opposite sides of the annular gap formed by the first coil 21 and the second coil 22 of the second magnet system 2. Hereby, the first electrode ring 304 and the second electrode ring 306 form a first electrode arrangement enclosing at least a first part of the mirror region 108b.

The third electrode ring 308 is longitudinally displaced with respect to the first electrode ring 304. Analogously, the fourth electrode ring 310 is longitudinally displaced with respect to the second electrode ring 306. Again, analogously to the first electrode ring 304 and the second electrode ring 306, the third electrode ring 308 and the fourth electrode ring 310 are radially and transversally displaced with respect to each other and located on radially and transversally opposite sides of the mirror region 108b, i.e., the third electrode ring 308 and the fourth electrode ring 310 are located on radially and transversally opposite sides of the annular gap formed by the first coil 21 and the second coil 22 of the second magnet system 2. Thus, the third electrode ring 308 and the fourth electrode ring 310 form a second electrode arrangement enclosing at least a second part of the mirror region 108b, and, moreover, the second electrode arrangement thus formed is longitudinally displaced with respect to the first electrode arrangement.

As visible in Figs 1 and 2a, the electrode rings 304, 306, 308, 310 of the plurality of electrode arrangements 302 have a slanted profile with respect to the axial direction of the magnetic mirror machine 200, aligned with the longitudinal direction of the magnetic field lines in the mirror region 108b. This may be preferable in order to create an electric field as much as possible aligned with the magnetic field at the mirror region 108b.

Fig. 2b shows an alternative configuration of a plurality of electrode arrangements according to the first type, in which the electrode rings 304, 306, 308, 310 are aligned with an axial direction of the magnetic mirror machine 200. Other alignments of the electrode rings are equally possible.

A second type of electrode arrangement may configured to be located transversally inside a coil of the plurality of coils of the magnetic mirror machine 200.

In particular, as shown in Fig. 1, a first plurality of electrode arrangements 312 of the second type may be located at the third mirror region 108c and a second plurality of electrode arrangements 314 of the second type may located at the fourth mirror region 108d.

In the example of Fig.1, the first plurality of electrode arrangements 312 of the second type and the second plurality of electrode arrangements 314 of the second type have mirror symmetry with respect to the plane P and further reference will be made to the second plurality of electrode arrangements 314 of the second type. As the skilled person would recognize, any features of the second plurality of electrode arrangements 314 of the second type disclosed herein would equally apply to the first plurality of electrode arrangements 312 of the second type.

The second plurality of electrode arrangements 314 of the second type is visible in Fig.1 and is further depicted in a detailed perspective view in Fig. 2c. As visible, the second plurality of electrode arrangements 314 of the second type comprises a plurality of electrode components, in the form of a first electrode ring 316, and a second electrode ring 318, located at the cylindrical gap transversally and radially inside the first coil 21.

The first electrode ring 316 and the second electrode ring 318 are longitudinally displaced with respect to each other. Hereby, the first electrode ring 316 encloses a first part of the mirror region 108d and the second electrode ring 318 encloses a second part of the mirror region 108d.

As visible in Figs 1 and 2c, the electrode rings 316, 318 of the plurality of electrode arrangements 314 are aligned with an axial direction of the magnetic mirror machine 200, aligned with the longitudinal direction of the magnetic field lines in the mirror region 108d. This may be preferable in order to create an electric field as much as possible aligned with the magnetic field at the mirror region 108b. Other alignments of the electrode rings are equally possible. For example, the electrode rings 316, 318 may be slanted with respect to the axial direction.

The magnetic mirror machine 200 may further comprise circuitry 320 arranged to apply an alternating electric potential between the first electrode arrangement and the second electrode arrangement of any of the pluralities of electrode arrangements disclosed above. The alternating electric potential may preferably have an angular frequency adapted for ponderomotive plugging of plasma electrons, as given by the energy potential resulting from the ponderomotive force, disclosed elsewhere herein.

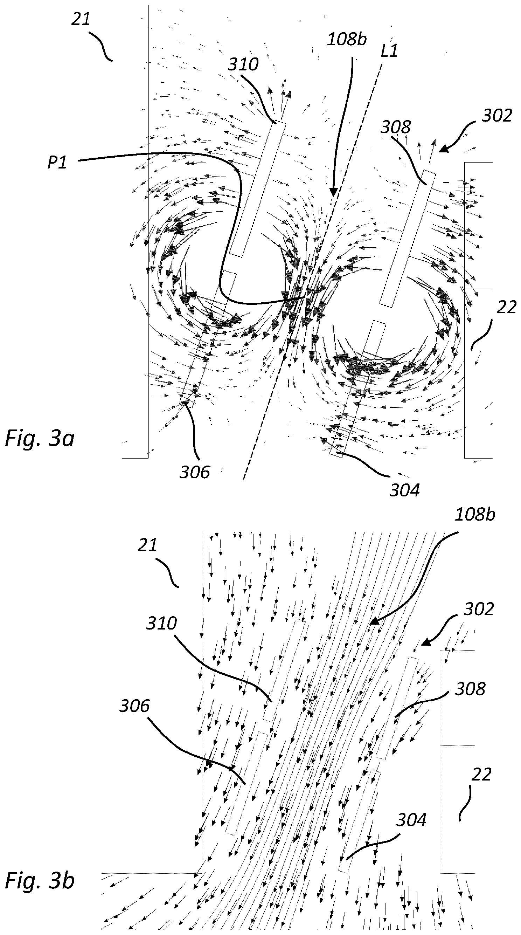

Fig. 3a is a planar cross-sectional view of electric field strengths around a the second plurality of electrode arrangements 302 the first type at a fixed moment in time, which may correspond to a specific phase angle. For example, the phase angle may correspond to an instantaneous maximum in the applied alternating electric potential. As the skilled person would understand, the electric fields will scale according to the sinusoidal alternating potential applied during its cycle. In Fig. 3a a larger arrow corresponds to a stronger electric field, while the direction of the arrow shoes the direction of the electric field.

Fig. 3b is a planar cross-sectional view of magnetic B field lines and directions in the mirror region 108b, wherein arrows in Fig. 3b indicate magnetic B field directions, i.e., only indicating the direction of the magnetic B field and not the magnitude of the magnetic B field. As visible in Figs 3a and 3b the plurality of electrode arrangements 302 may provide for an electric field parallel to, or substantially parallel to, the magnetic field in a large part of the mirror region 108b.

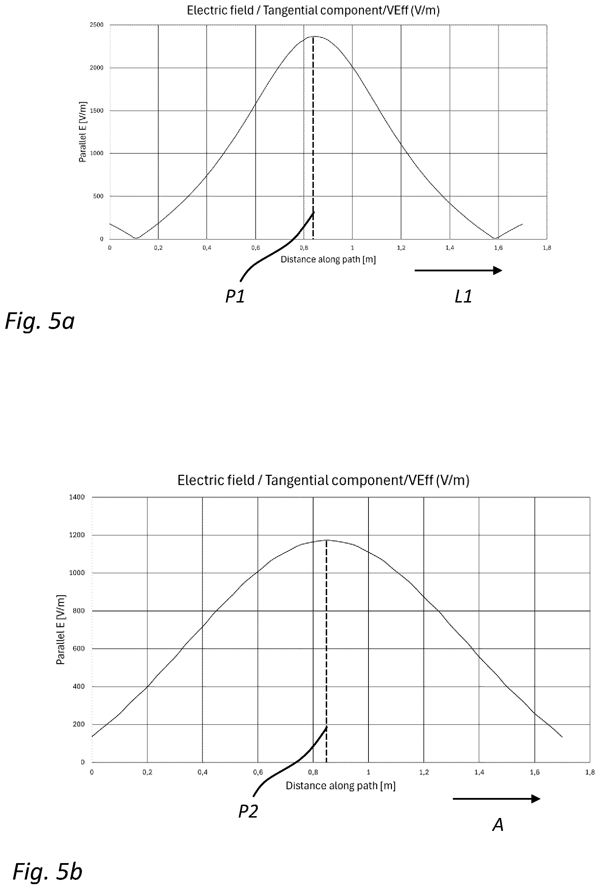

Further, Fig. 5a shows an example simulated electric field strength component parallel to the magnetic field along a central line L1 (cf. Fig. 3a) in the mirror region 108b. As can be seen, the electric field has a maximum at a central point P1 of the mirror region 108b. Referring to the expression for the energy potential resulting from the ponderomotive force for plasma electrons, as disclosed elsewhere herein, being proportional to the square of the electric field strength component parallel to the magnetic B field, it can be seen that the electric field configuration results in a repulsive ponderomotive force on electrons away from the central point P1.

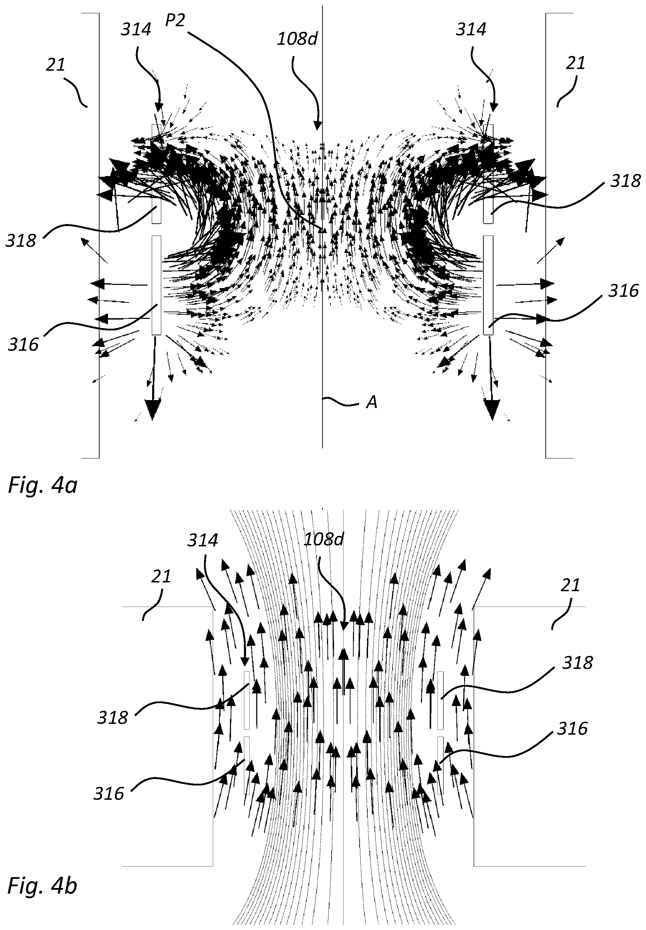

Similarly to Fig. 3a, Fig. 4a is a planar cross-sectional view of electric field strengths around the second plurality of electrode arrangements 314 according to the second type, and, similarly to Fig. 3b, Fig. 4b is a planar cross-sectional view of magnetic B field lines and directions in the mirror region 108d. Again, as visible in Figs 4a and 4b, the plurality of electrode arrangements 314 may provide for an electric field parallel to, or substantially parallel to, the magnetic field in a large part of the mirror region 108d.

Further, Fig. 5b shows an example simulated electric field strength component parallel to the magnetic field along a central line in the mirror region 108d coinciding with the symmetry axis A (cf. Fig. 4a). As can be seen, the electric field has a maximum at a central point P2 of the mirror region 108d. Again, referring to the expression for the energy potential resulting from the ponderomotive force for plasma electrons, as disclosed elsewhere herein, being proportional to the square of the electric field strength component parallel to the magnetic B field, it can be seen that the electric field configuration results in a repulsive ponderomotive force on electrons away from the central point P2.

Fig. 6 is a planar cross-sectional view of a second magnetic mirror machine 600. The magnetic mirror machine 600 may operate as a plasma confinement device and thus may be used for plasma confinement.

The magnetic mirror machine 600 may comprise customary shielding and/or a plasma vessel 202, as known in the art. The shielding may comprise neutron shielding, as known per se.

The magnetic mirror machine 600 may be comprised in a fusion reactor and/or used in a fusion reactor.

In the example of Fig. 6, the magnetic mirror machine 600 is rotationally symmetric, or at least substantially rotationally symmetric, around a symmetry axis A lying in the plane of Fig. 6.

As will be elaborated further upon below, the magnetic mirror machine 600 comprises a plurality of electromagnetic coils comprised in a number of magnet systems. Each electromagnetic coil may be arranged in a circular loop, as in Fig. 6. Thus, the magnetic mirror machine 600 comprises a plurality of circularly arranged coils.

Each electromagnetic coil may be arranged for carrying a respective direct current, the direction of which being conventionally indicated using respective a dot or cross in Fig. 6, wherein a dot indicates a conventional current directed out of the cross-sectional plane of the drawing and a cross indicates a conventional current directed into the cross-sectional plane of the drawing.

Thus, Fig. 6 shows coil direct current directions during operation of the magnet systems as used in a plasma confinement device. As readily appreciated by the skilled person, embodiments with all currents reversed as compared to what is disclosed in Fig. 6 are equally possible.

The magnetic mirror machine 600 comprises a first magnet system 1 and a second magnet system 2, with Fig. 6 showing a cross sectional view through the first magnet system 1 and the second magnet system 2 in a cross-sectional plane through the symmetry axis A.

The first magnet system 1 comprises a first plurality of concentrically arranged circular-loop coils arranged around a symmetry axis A, for example, as shown, a first, inner coil 11 and a second, outer, coil 12, arranged concentrically to and radially and transversally outside the inner coil 11.

Further, the magnetic mirror machine 600 comprises a second magnet system 2 comprising a second plurality of circular-loop coils, likewise concentrically arranged around the axis A, but vertically and longitudinally displaced relative to the first magnet system. The second magnet system may, for example, as shown, comprise a first, inner coil 21 and a second, outer, coil 22, arranged concentrically to and radially and transversally outside the inner coil 21.

The coils 21, 22 of the second magnet system 2 are arranged with mirror symmetry with respect to the coils 11, 12 of first magnet system 1 relative to a symmetry plane P, which, as shown, may be at equal distance to each of the first magnet system 1 and to the second magnet system 2.

Still with reference to Fig. 6, the first plurality of concentrically arranged coils 11, 12 of the first magnet system 1 may, as shown, be identically designed to the second plurality of concentrically arranged coils 21, 22 of the second magnet system 2, respecting the mirror symmetry.

In the first magnet system 1, the current of the inner coil 11 is configured to run in a direction into the cross-sectional plane (marked with a cross) on the right side of Fig. 6 and out of the cross-sectional plane (marked with a dotted circle) in the left side of Fig. 6, i.e., counter-clockwise a seen from above the first magnet system. Conversely, the current of the outer coil 12 is configured to run in a direction out of the cross-sectional plane (marked with a dotted circle) on the right side of Fig. 6 and into the cross-sectional plane (marked with a cross circle) in the left side of Fig. 6, i.e., clockwise a seen from above the first magnet system.

Thus, the first plurality of concentrically arranged circular-loop coils comprises a first coil 11 arranged to carry a current in a first direction, and a second coil 12 arranged to carry a current in a second direction opposite to the first direction.

Similarly, respecting the mirror symmetry with respect to the symmetry plane P, in the second magnet system 2, the current of the inner coil 21 is configured to run in a direction into the cross-sectional plane (marked with a cross) on the right side of Fig. 6 and out of the cross-sectional plane (marked with a dotted circle) in the left side of Fig. 6, i.e., counter-clockwise a seen from above the first magnet system and the current of the outer coil 22 is configured to run in a direction out of the cross-sectional plane (marked with a dotted circle) on the right side of Fig. 6 and into the cross-sectional plane (marked with a cross circle) in the left side of Fig. 6, i.e., clockwise a seen from above the first magnet system.

Thus, the currents of the second magnet system 2, with first magnet system 1 and the second magnet system 2 in operation, are arranged with mirror symmetry with respect to the first magnet system relative to the symmetry plane P located between the first magnet system 1 and the second magnet system 2.

Thus, expressed in other words, a plasma confinement device may comprise two disc-shaped magnet systems 1, 2 facing each other in axial direction, forming a space 206 where a plasma may be confined. Each magnet system 1, 2 has at least two coils 11, 12, 21, 22 where the current direction and magnitude create a normal magnetic field boundary condition at the symmetry plane P.

Further, as shown in Fig. 6, the magnetic mirror machine 300 may comprise a third magnet system 3, which may be arranged radially and transversally outside, with respect to the axis A, the plasma confinement area 206. Further, again as shown in Fig. 6, the third magnet system 3 may be located radially and transversally outside, with respect to the axis A, the first magnet system 1 and the second magnet system 2.

The third magnet system 3 may comprise at least one circular-loop coil, for example, as shown, single, cylindrical coil 30. Alternatively (not shown), for example, the third magnet system may comprise a first circular-coil loop coil arranged on the same side of the symmetry plane P as the first magnet system and a second circular-coil loop arranged on the opposite side of the symmetry plane P, wherein the second coil is arranged with mirror symmetry relative to the first coil.

In particular, each coil of the third magnet system, such as the coil 30, as shown in Fig. 6, has a current configured to run, with the magnet system in operation, in a direction into the cross-sectional plane (marked with a cross) on the left side of Fig. 6 and out of the cross-sectional plane (marked with a dotted circle) on the right side of Fig. 6, i.e., clockwise as seen from above the first magnet system.

Further, the magnetic mirror machine 600 of Fig. 6 comprises an optional first tandem magnet system 4 located longitudinally and axially outside and adjacent to the first magnet system 1, and an optional second tandem magnet system 4' located longitudinally outside and adjacent to the second magnet system 2.

Each of the first tandem magnet system 4 and the second tandem magnet system 4' comprises a first tandem coil 41 located longitudinally outside the first coil 11, 21 of, respectively, the first magnet system 1 and the second magnet system 2. As shown through dots and crosses, each first tandem coil 41 is arranged to carry a current in the first direction, i.e., the same direction of current as that of the inner coil 21 of the second magnet system 2 and of the inner coil 11 of the first magnet system 1, and opposite to that of the outer coil 22 of the second magnet system 2 and the outer coil 12 of the first magnet system 1.

Further, each of the first tandem magnet system 4' and the second tandem magnet system 4 comprises a second tandem coil 42 located longitudinally outside the second coil 12, 22 of respectively, the first magnet system 1 and the second magnet system 2. As shown through dots and crosses, each second tandem coil 42 is arranged to carry a current in the second direction, i.e., opposite to the direction of current of the inner coil 21 of the second magnet system 2 and of the inner coil 11 of the first magnet system 1, and in the same direction of current to that of the outer coil 22 of the second magnet system 2 and the outer coil 12 of the first magnet system 1.

Thus, as can be seen in Fig. 6, each of the first tandem magnet system 4 and the second tandem magnet system 4' comprises a plurality of concentrically arranged circular-loop coils arranged around the symmetry axis A, in the form of the first, inner coil 41 and the second, outer coil 42, so that the second coil 42 is located radially and transversally outside the first coil 41.

Alternatively speaking, the first coil 41 and the second coil 42 are co-disposed co-axially with respect to the symmetry axis A.

As evident from Fig. 6, the second tandem system 4' may be arranged with mirror symmetry with respect to the first tandem magnet system 4 relative to the symmetry plane P.

Fig. 6 further shows magnetic field lines resulting from the mirror-symmetric configuration of currents in the magnet systems described above. The resulting magnetic field configuration results in the annular confinement area 206, in which ions of a plasma may be confined. The plasma confinement area is radially restricted between an inner radius and an outer radius, as confirmed by simulations. Plasma ions confined in the plasma confinement device, in the plasma confinement area 206 at the symmetry plane P, will perform a circular gyration motion in that plane due to the magnetic field perpendicular to that plane. As mentioned, no toroidal field is present. Given the absence of a toroidal magnetic field component, therefore, there will be no axial Lorentz force on the ions at the symmetry plane P. Moving away from the symmetry plane in axial direction, along a field line, the Lorentz force may push the ion back towards the symmetry plane, confining the ion at the symmetry plane.

Through an appropriate choice of the geometries of the of the coils of the first magnet system 1 and the second magnet system 2, and optionally of the third magnet system 3, and the currents carried therein, it is possible to achieve a field configuration displaying a region of relatively low magnetic flux density near the symmetry plane P and a region of relatively high magnetic flux density extending into and past the regions 108a,b,c,d, as will be elaborated further upon below, creating the confinement area 206 for charged particles, based on the principle of magnetic reflection. In particular, it is possible to arrange for the first magnet system 1, the second magnet system 2, and, optionally, the third magnet system 3, to generate a plurality of mirror regions of converging magnetic field lines, again, as will be further elaborated upon below.

Thus, as is evident from Fig. 6, the plasma confinement area comprises mirror regions 108a,b, c, d of increased magnetic flux density, or, alternatively expressed, converging magnetic field lines, relative to an area around symmetry plane P of the magnetic mirror machine, as is evident from the magnetic field line spacing in each mirror region 108a,b,c, d as compared to the area around the symmetry plane P. In other words, each respective mirror region 108a,b, c, d comprises converging magnetic field lines as approached from the area around the symmetry plane P of the magnetic mirror machine 200.

A first mirror region 108a is formed between the first coil 11 and the second coil 12 of the first magnet system, while a second mirror region 108b is formed between the first coil 21 and the second coil 22 of the second magnet system.

Thus, the first mirror region 108a and the second mirror region 108b each is formed at an annular gap between a first coil of the plurality of coils arranged to carry a current in the first direction and a second coil of the plurality of coils arranged to carry a current in a second direction opposite to the first direction.

A third mirror region 108c is formed in a cylindrical gap transversally inside the first coil 11 of the first magnet system 1.

A fourth mirror region 108d is formed in a cylindrical gap transversally inside the first coil 21 of the second magnet system 2.

Furthermore, in the presence of a tandem magnet system 4, 4', the plasma confinement area 206 extends into the space 206' between, respectively, the first magnet system 1 and the first tandem magnet system 4, and the second magnet system 2 and the second tandem magnet system 4'. The respective spaces 206' may be regarded as additional cells of the magnetic mirror machine 200, located longitudinally outside, respectively, the first magnet system 1 and the second magnet system 2.

A fifth mirror region 108e is formed between the first tandem coil 41 and the second tandem coil 42 of the first tandem magnet system 4, while a sixth mirror region 108f is formed between the first tandem coil 41 and the second tandem coil 42 of the second tandem magnet system 4'.

As will be elaborated upon further below, the magnetic mirror machine 600 further comprises at least one plurality of electrode arrangements arranged at one of the mirror regions 108a,b,c,d. For example, as shown in Fig. 6, a respective such a plurality of electrode arrangements may be present at each of the mirror regions 108a,b,c,d.

As for the magnetic mirror machine 200 discussed above in conjunction with Fig. 1, the first type of plurality of electrode arrangements of the magnetic mirror machine 600 may be configured to enclose an annular gap between two coils.

In particular, as shown in Fig. 6, a first plurality of electrode arrangements 700 of the first type may be located at the annular gap formed at the first mirror region 108a and a second plurality of electrode arrangements 702 of the first type may be located at the annular gap formed at the second mirror region 108b.

In the example of Fig.6, the first plurality of electrode arrangements 700 of the first type and the second plurality of electrode arrangements 702 of the first type have mirror symmetry with respect to the plane P and further reference will be made to the second plurality of electrode arrangements 702 of the first type. As the skilled person would recognize, any features of the second plurality of electrode arrangements 702 of the first type disclosed herein would equally apply to the first plurality of electrode arrangements 300 of the first type.

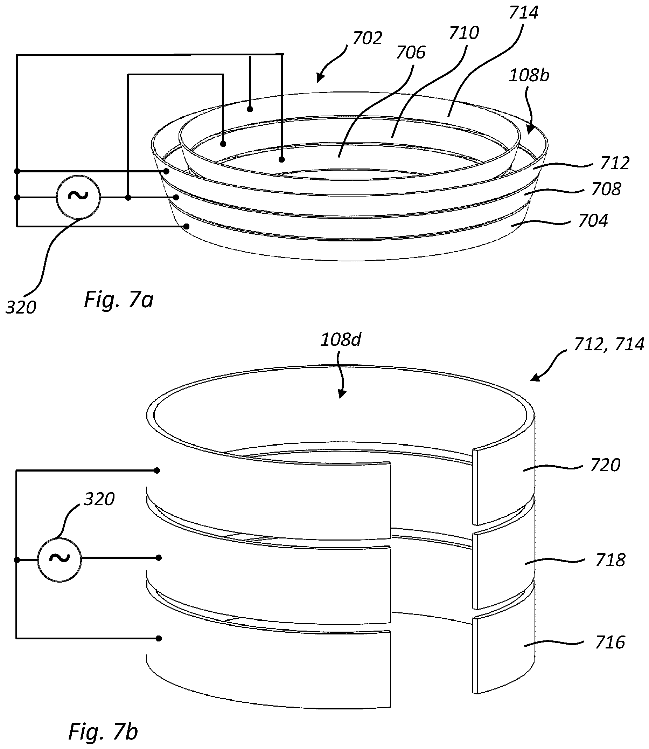

The second plurality of electrode arrangements 702 of the first type is visible in Fig.6 and is further depicted in a detailed perspective view in Fig. 7a. As visible, the second plurality of electrode arrangements 702 of the first type comprises a plurality of electrode components, in the form of a first electrode ring 704, a second electrode ring 706, a third electrode ring 708, a fourth electrode ring 710, a fifth electrode ring 712, and a sixth electrode ring 714.

The third electrode ring 708 and the fourth electrode ring 710 are radially and transversally displaced with respect to each other and located on radially and transversally opposite sides of the mirror region 108b, i.e., the third electrode ring 708 and the fourth electrode ring 710 are located on radially and transversally opposite sides of the annular gap formed by the first coil 21 and the second coil 22 of the second magnet system 2. Hereby, the third electrode ring 708 and the fourth electrode ring 710 form a first electrode arrangement enclosing at least a first part of the mirror region 108b.

The first electrode ring 704 is longitudinally displaced with respect to the third electrode ring 708. Analogously, the second electrode ring 706 is longitudinally displaced with respect to the fourth electrode ring 710. Again, analogously to the third electrode ring 708 and the fourth electrode ring 710, the first electrode ring 704 and the second electrode ring 706 are radially and transversally displaced with respect to each other and located on radially and transversally opposite sides of the mirror region 108b, i.e., the first electrode ring 704 and the second electrode ring 706 are located on radially and transversally opposite sides of the annular gap formed by the first coil 21 and the second coil 22 of the second magnet system 2. Thus, the first electrode ring 704 and the second electrode ring 706 form a second electrode arrangement enclosing at least a second part of the mirror region 108b, and, moreover, the second electrode arrangement thus formed is longitudinally displaced with respect to the first electrode arrangement.

The fifth electrode ring 712 is longitudinally displaced with respect to the third electrode ring 708. Analogously, the sixth electrode ring 714 is longitudinally displaced with respect to the fourth electrode ring 710. Again, analogously to the first electrode ring 704 and the second electrode ring 706, and to the third electrode ring 708 and the fourth electrode ring 710, the fifth electrode ring 712 and the sixth electrode ring 714 are radially and transversally displaced with respect to each other and located on radially and transversally opposite sides of the mirror region 108b, i.e., the firth electrode ring 712 and the sixth electrode ring 714 are located on radially and transversally opposite sides of the annular gap formed by the first coil 21 and the second coil 22 of the second magnet system 2. Thus, the fifth electrode ring 712 and the sixth electrode ring 714 form a third electrode arrangement enclosing at least a third part of the mirror region 108b, and, moreover, the third electrode arrangement thus formed is longitudinally displaced with respect to the first electrode arrangement and the second electrode arrangement. Moreover, the longitudinal displacement of the third electrode arrangement relative to the first electrode arrangement is in a direction opposite of the longitudinal displacement of the second electrode arrangement relative to the first electrode arrangement.

As visible in Figs 6 and 7a, the electrode rings 704, 706, 708, 710, 712, 714 of the plurality of electrode arrangements 702 have a slanted profile with respect to the axial direction of the magnetic mirror machine 600, aligned with the longitudinal direction of the magnetic field lines in the mirror region 108b. This may be preferable in order to create an electric field as much as possible aligned with the magnetic field at the mirror region 108b.

Alternatively, the electrode rings 704, 706, 708, 710, 712, 714 may be aligned with an axial direction of the magnetic mirror machine 600. Other alignments of the electrode rings are equally possible.

The magnetic mirror machine 600 may further comprise circuitry 320 arranged to apply an alternating electric potential between, on the first hand the first electrode arrangement, and, on the second hand, the second electrode arrangement and the third electrode arrangement of any of the pluralities of electrode arrangements disclosed above.

Alternatively, the magnetic mirror machine 600 may comprise circuitry 320 configured to apply a first alternating electric potential between the first electrode arrangement and the second electrode arrangement, and a second alternating electric potential between the first electrode arrangement and the third electrode arrangement, wherein the second alternating electric potential is independent of the first alternating electric potential so that the second alternating electric potential may be different from the first alternating electric potential.

The alternating electric potential may preferably have an angular frequency adapted for ponderomotive plugging of plasma electrons, as given by the energy potential resulting from the ponderomotive force, disclosed elsewhere herein.

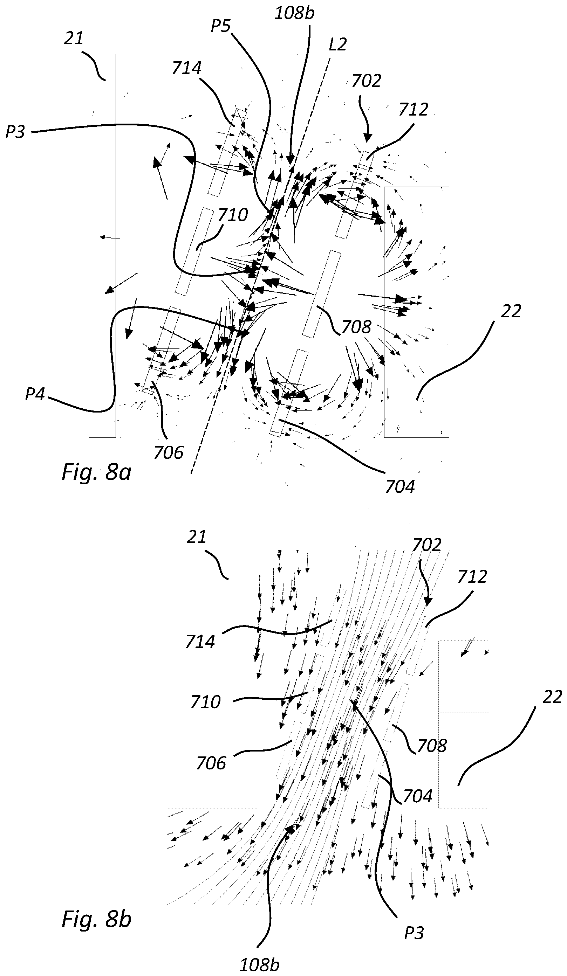

Fig. 8a is a planar cross-sectional view of electric field strengths around a the second plurality of electrode arrangements 702 the first type at a fixed moment in time, which may correspond to a specific phase angle. For example, the phase angle may correspond to an instantaneous maximum in the applied alternating electric potential. As the skilled person would understand, the electric fields will scale according to the sinusoidal alternating potential applied during its cycle. In Fig. 8a a larger arrow corresponds to a stronger electric field, while the direction of the arrow shoes the direction of the electric field.

Fig. 8b is a planar cross-sectional view of magnetic B field lines and direction in the mirror region 108b, wherein arrows in Fig. 8b indicate magnetic B filed direction, i.e., only indicating the direction of the magnetic B field and not the magnitude of the electric field. As visible in Figs 8a and 8b the plurality of electrode arrangements 702 may provide for an electric field parallel to, or substantially parallel to, the magnetic field in a large part of the mirror region 108b.

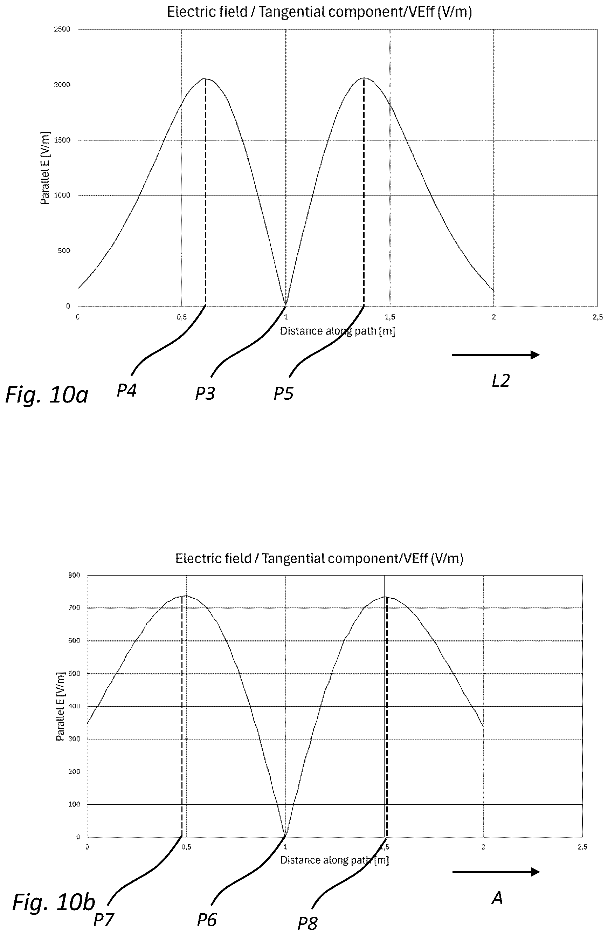

Further, Fig. 10a shows an example simulated electric field strength component parallel to the magnetic field along a central line L2 (cf. Fig. 8a) in the mirror region 108b. As can be seen, the electric field has a minimum at a central point P3 of the mirror region 108b and maxima at more peripheral points P4 and P5 along the central line L2. Referring to the expression for the energy potential resulting from the ponderomotive force for plasma electrons, as disclosed elsewhere herein, being proportional to the square of the electric field strength component parallel to the magnetic B field, it can be seen that the electric field configuration results in a repulsive ponderomotive force on electrons away from points P4 and P5.

As visible at least in Figs 6, 7a, and 8a, the second plurality of electrode arrangements 702 is arranged at the mirror region 108b so that the second part of the mirror region enclosed by the first electrode ring 704 and the second electrode ring 706 and the third part of the mirror region enclosed by the fifth electrode ring 712 and the sixth electrode ring 714 are located at opposite sides of the region around the point P3 of maximal magnetic flux density of the mirror region.

Again, as for the magnetic mirror machine 200 discussed above in conjunction with Fig. 1, the second type of electrode arrangement may configured to be located transversally inside a coil of the plurality of coils of the magnetic mirror machine 600.

In particular, as shown in Fig. 6, a first plurality of electrode arrangements 712 of the second type may be located at the third mirror region 108c and a second plurality of electrode arrangements 714 of the second type may located at the fourth mirror region 108d.

In the example of Fig.6, the first plurality of electrode arrangements 712 of the second type and the second plurality of electrode arrangements 714 of the second type have mirror symmetry with respect to the plane P and further reference will be made to the second plurality of electrode arrangements 714 of the second type. As the skilled person would recognize, any features of the second plurality of electrode arrangements 714 of the second type disclosed herein would equally apply to the first plurality of electrode arrangements 712 of the second type.

The second plurality of electrode arrangements 714 of the second type is visible in Fig.6 and is further depicted in a detailed perspective view in Fig. 7c. As visible, the second plurality of electrode arrangements 714 of the second type comprises a plurality of electrode components, in the form of a first electrode ring 716, a second electrode ring 718, and a third electrode ring 720, located at the cylindrical gap transversally and radially inside the first coil 21.

The first electrode ring 716, the second electrode ring 718, and the third electrode ring 720 are longitudinally displaced with respect to each other. Moreover, the third electrode ring 720 is longitudinally displaced with respect to the second electrode ring 718 in a direction opposite to the displacement of the first electrode ring 716 in relation to the second electrode ring 718. Hereby, the first electrode ring 716 encloses a first part of the mirror region 108d, the second electrode ring 718 encloses a second part of the mirror region 108d, and the third electrode ring 720 encloses a third part of the mirror region 108d.

As visible in Figs 6 and 7b, the electrode rings 716, 718, 720 of the plurality of electrode arrangements 702 are aligned with an axial direction of the magnetic mirror machine 600, aligned with the longitudinal direction of the magnetic field lines in the mirror region 108d. This may be preferable in order to create an electric field as much as possible aligned with the magnetic field at the mirror region 108b. Other alignments of the electrode rings are equally possible. For example, the electrode rings 716, 718, 720 may be slanted with respect to the axial direction.

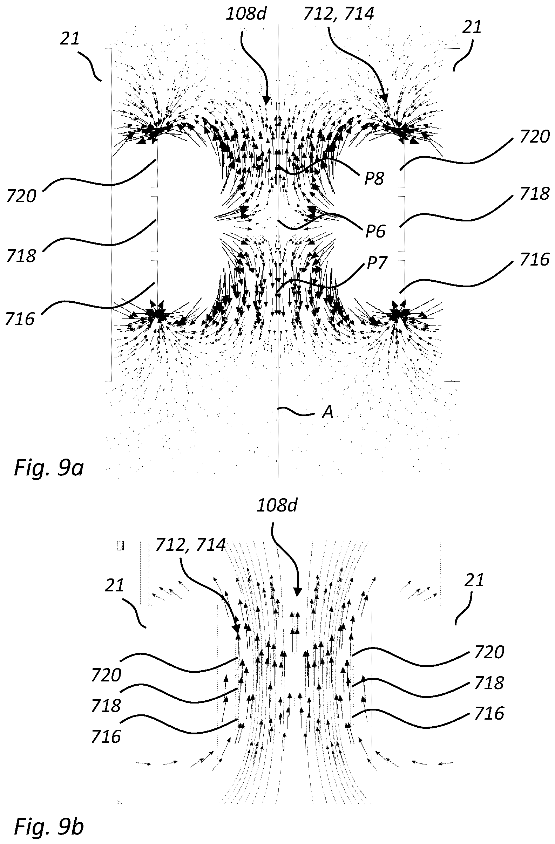

Similarly to Fig. 8a, Fig. 9a is a planar cross-sectional view of electric field strengths around the second plurality of electrode arrangements 714 according to the second type, and, similarly to Fig. 8b, Fig. 9b is a planar cross-sectional view of magnetic B filed lines and directions in the mirror region 108d. Again, as visible in Figs 9a and 9b, the plurality of electrode arrangements 714 may provide for an electric field parallel to, or substantially parallel to, the magnetic field in a large part of the mirror region 108d.

Further, Fig. 10b shows an example simulated electric field strength component parallel to the magnetic field along a central line in the mirror region 108d coinciding with the symmetry axis A (cf. Fig. 9a). As can be seen, the electric field has a minimum at a central point P6 of the mirror region 108d and maxima at more peripheral points P7 and P8 along the axis A. Referring to the expression for the energy potential resulting from the ponderomotive force for plasma electrons, as disclosed elsewhere herein, being proportional to the square of the electric field strength component parallel to the magnetic B field, it can be seen that the electric field configuration results in a repulsive ponderomotive force on electrons away from points P7 and P8.

As visible at least in Figs 6, 7b, and 8b, the second plurality of electrode arrangements 714 is arranged at the mirror region 108d so that the first part of the mirror region enclosed by the first electrode ring 716 and the third part of the mirror region enclosed by the third electrode ring 720 are located at opposite sides of the region around the point P3 of maximal magnetic flux density of the mirror region.

Each electromagnetic coil throughout this disclosure may be manufactured and arranged using methods, materials, compounds, and the like, known per se in the art, for example using, copper, or some other suitable metal as conductor.

Alternatively, each electromagnetic coil may be a superconductor coil. Suitable superconductor materials may include YBCO, Bi2223, 2212, Nb3SN, NbTi, MgB2, and/or ReBCO. The electromagnetic coils throughout this disclosure may, for example, be so-called high-temperature superconductor coils.

As known in the art, a superconductor coil may comprise internal structure. For example, within each superconductor coil, superconducting material may be arranged in filaments, strands, cables, ropes, or the like using methods generally known in the art. The cross-section of the coil, as referred to throughout this disclosure, should then be understood as an enclosing envelope of this internal structure.

For example, the superconductor coils throughout this disclosure may be manufactured and arranged using methods, materials, compounds, and the like, as detailed in D Uglietti: A review of commercial high temperature superconducting materials for large magnets: from wires and tapes to cables and conductors, Supercond. Sci. Technol. 32 (2019) 053001 (29pp), https://doi.org/10.1088/1361-6668/ab06a2, incorporated herein by reference.

Further, the superconductor coils may be cooled using methods generally known per se in the art.

Physical dimensions of the magnetic mirror machine 200 may depend on many parameters such as engineering current density in the magnetic coils, the degree of confinement of alpha particles, the desired plasma volume, etc., as contemplatable by the skilled person.

Typical dimensions may be as follows. An outer radius of the coils 42, 12, 22, 42 may be about 1.5 m. The axial distance between the bottom of coils 41, 42 of the first tandem magnet system 4 and the top of coils 41, 42 of the second tandem magnet system 4' may be about 2.8 m.

The inventive concept has mainly been described above with reference to example embodiments. However, as is readily appreciated by a person skilled in the art, other embodiments than the ones disclosed above are equally possible within the scope of the inventive concept, as defined by the appended patent claims.

For example, the present inventive concept is generally applicable to magnetic mirror machines comprising a plurality of circularly arranged coils arranged for generating a plurality of mirror regions. Thus, it is equally applicable to other such configurations than those specific configurations of pluralities of circularly arranged coils disclosed herein.

Further, pluralities of electrode arrangements having two electrode arrangements have been disclosed above in conjunction with the magnetic mirror machine 200 having no tandem cells, while pluralities of electrode arrangements having three electrode arrangements have been disclosed above in conjunction with the magnetic mirror machine 600 with tandem cells. However, as the skilled person would readily contemplate, the concepts and embodiments related to pluralities of electrode arrangements having three electrode arrangements disclosed above are equally applicable to a magnetic mirror machine having no tandem cells, and the concepts and embodiments related to pluralities of electrode arrangements having two electrode arrangements disclosed above are equally applicable to magnetic mirror machines having tandem cells.

**Claims**

1. A magnetic mirror machine (200, 600), comprising:

   a plurality of circularly arranged coils (11, 12, 21, 22, 41, 42) arranged for generating a plurality of mirror regions (108a,b,c,d,e,f) of converging magnetic field lines; and
   a plurality of electrode arrangements (300, 302, 312, 314, 700, 702, 712, 714) at a mirror region of said plurality of mirror regions,

   wherein said plurality of electrode arrangements comprises:

   a first electrode arrangement comprising one or more electrode components (304, 306, 316, 706, 708, 718) enclosing at least a first part of said mirror region; and
   a second electrode arrangement, longitudinally displaced with respect to said first electrode arrangement, comprising one or more electrode components (308, 310, 318, 712, 714, 720) enclosing at least a second part of said mirror region.

2. The magnetic mirror machine of claim 1, wherein said mirror region is formed at an annular gap between a first coil of said plurality of coils arranged to carry a current in a first direction and a second coil of said plurality of coils arranged to carry a current in a second direction opposite to said first direction.

3. The magnetic mirror machine of claim 2, wherein the respective one or more electrode components of an electrode arrangement of said plurality of electrode arrangements comprises a first electrode ring and a second electrode ring, wherein said first electrode ring and said second electrode ring are located on transversally opposite sides of said annular gap.

4. The magnetic mirror machine of claim 1, wherein said mirror region is formed at a cylindrical gap transversally inside a coil of said plurality of coils.

5. The magnetic mirror machine of claim 4, wherein an electrode arrangement of said plurality of electrode arrangements comprises an electrode ring located at said cylindrical gap.

6. The magnetic mirror machine of any one of claims 1-5, said plurality of electrode arrangements further comprising:
   a third electrode arrangement, longitudinally displaced with respect to said first electrode arrangement in a direction opposite to said second electrode arrangement, comprising one or more electrode components enclosing at least a third part of said mirror region.

7. The magnetic mirror machine of claim 6, wherein said plurality of electrode arrangements are arranged at said mirror region so that said first part of said mirror region and said third part of said mirror region are located at opposite sides of a region of maximal magnetic flux density of said mirror region.

8. The magnetic mirror machine of any one of claims 1-7, wherein said magnetic mirror machine further comprises circuitry arranged to apply an alternating electric potential between said first electrode arrangement and said second electrode arrangement.

**9.** A method applied at a magnetic mirror machine comprising a plurality of circularly arranged coils, comprising:

generating, using said plurality of circularly arranged coils, a plurality of mirror regions of converging magnetic field lines; and applying an alternating electric potential between a first electrode arrangement enclosing at least a first part of said mirror region and a second electrode arrangement longitudinally displaced with respect to said first electrode arrangement and enclosing at least a second part of said mirror region.

**12.** A magnetic mirror machine comprising a plurality of circularly arranged coils, said plurality of circularly arranged coils comprising a first coil arranged to carry a current in a first direction and a second coil arranged to carry a current in a second direction opposite to said first direction, said magnetic mirror machine further comprising, at an annular gap between said first coil and said second coil:

a first electrode arrangement, comprising a first electrode ring and a second electrode ring, wherein said first electrode ring and said second electrode ring are located on transversally opposite sides of said annular gap; and a second electrode arrangement longitudinally displaced with respect to said first electrode arrangement and comprising a first electrode ring and a second electrode ring, wherein said first electrode ring and said second electrode ring are located on transversally opposite sides of said annular gap.

**13.** A magnetic mirror machine comprising a plurality of circularly arranged coils, said magnetic mirror machine further comprising, at a cylindrical gap transversally inside a coil of said plurality of coils:

a first electrode arrangement comprising a first electrode ring located at said circular gap; and a second electrode arrangement longitudinally displaced with respect to said first electrode arrangement comprising a second electrode ring.

Fig. 1

Fig. 2a

Fig. 2b

Fig. 2c

*Fig. 3a*

*Fig. 3b*

Fig. 4a

Fig. 4b

Fig. 5a

Fig. 5b

Fig. 6

*702* *706* *710* *714*

*108b*

*712*
*708*
*704*

*320* **Fig. 7a**

*108d* *712, 714*

*320*

*720*

*718*

*716*

**Fig. 7b**

Fig. 8a

Fig. 8b

Fig. 9a

Fig. 9b

Electric field / Tangential component/VEff (V/m)

Parallel E [V/m]

Distance along path [m]

L2

*Fig. 10a*  P4  P3  P5

Electric field / Tangential component/VEff (V/m)

Parallel E [V/m]

Distance along path [m]

A

*Fig. 10b*  P7  P6  P8

Europäisches
Patentamt

European
Patent Office

Office européen
des brevets

# EUROPEAN SEARCH REPORT

**Application Number**

EP 24 22 0014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHEFFEL J ET AL: "Axial Confinement in the Novatron Mirror Machine", ARXIV.ORG, CORNELL UNIVERSITY LIBRARY, 201 OLIN LIBRARY CORNELL UNIVERSITY ITHACA, NY 14853, 26 October 2024 (2024-10-26), XP091919096, * the whole document * | 1-11 | INV. G21B1/05 G21B1/11 H05H1/16 |
| X | US 3 120 470 A (IMHOFF DONALD H ET AL) 4 February 1964 (1964-02-04) * abstract; figures 1,2 * * column 1, lines 10-26 * * column 3, line 41 - column 4, line 6 * * column 6, lines 32-39 * | 1,9 | |
| A | JAN JÄDERBERG ET AL: "Introducing the Novatron, a novel reactor concept", ARXIV.ORG, CORNELL UNIVERSITY LIBRARY, 201 OLIN LIBRARY CORNELL UNIVERSITY ITHACA, NY 14853, 25 October 2023 (2023-10-25), XP091644292, * the whole document * | 1-11 | |

**TECHNICAL FIELDS SEARCHED (IPC)**

G21B
H05H

The present search report has been drawn up for all claims

| Place of search | Date of completion of the search | Examiner |
|---|---|---|
| Munich | 22 May 2025 | Manini, Adriano |

EPO FORM 1503 03.82 (P04C01)

## ANNEX TO THE EUROPEAN SEARCH REPORT
## ON EUROPEAN PATENT APPLICATION NO.

EP 24 22 0014

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2025

| Patent document cited in search report | Publication date | Patent family member(s) | Publication date |
|---|---|---|---|
| US 3120470 A | 04-02-1964 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2020081762 W

### Non-patent literature cited in the description

- **D UGLIETTI**. A review of commercial high temperature superconducting materials for large magnets: from wires and tapes to cables and conductors. *Supercond. Sci. Technol.*, 2019, vol. 32, 053001, https://doi.org/10.1088/1361-6668/ab06a2